# EUROPEAN PATENT APPLICATION

(11) **EP 3 730 276 A1**
(43) Date of publication of application: **28.10.2020**
(21) Application number: 19159355.7
(22) Date of filing: 26.02.2019
(51) Int. Cl.: B29C 45/76

(54) **METHOD AND SYSTEM FOR CONTROLLING OF AN INJECTION MOLDING PROCESS**

(71) Applicant: Covestro Deutschland AG, 51373 Leverkusen (DE)
(72) Inventor: The designation of the inventor has not yet been filed
(74) Representative: Levpat

(57) **Abstract**

A method for controlling of an injection molding process comprises a system for controlling of an injection molding process. The system for controlling of an injection molding process comprises an injection molding machine (1), a process monitoring assembly (2), a communication device (3) and a central remote assembly (4). The injection molding machine (1) produces a molded product (5), wherein the process monitoring assembly (2) gathers process data of the injection molding machine (1). The communication device (3) and the central remote assembly (4) send communication data to each other, wherein the process data are forwarded to the central remote assembly (4). The system comprises a product inspection assembly (6), wherein the product inspection assembly (6) inspects the molded product (5), generates inspection data and forwards the inspection data to the central remote assembly (4).

## Description

The invention relates to a method and a system for controlling of an injection molding process, wherein the system comprises an injection molding machine, a process monitoring assembly and a communication device, wherein the injection molding machine produces a molded product, wherein the process monitoring assembly gathers process data of the injection molding machine.

From DE 10 2017 123 940 A1 a method and a system for controlling of a plastic extruder for producing extruded plastic products are known. The system comprises the plastic extruder and a process monitoring assembly comprising smartglasses. A user puts on the smartglasses and looks onto a component of the plastic extruder. The system recognizes said component and adds additional data - in particular process data of said component like sensor data - onto the display of the smartglasses. The user is thus informed about the status of said component only by looking onto said component of the plastic extruder. The user may then, for example via a communication device like a smartphone, change a setting parameter if a value of the process data of said component is not within the desired range.

Sometimes the quality of plastic products suffers from surface defects like streaks, sink marks, flashes, residual stresses, black specks or foreign material contamination. These surface defects are in particular relevant for injection molding processes since molded products often have higher appearance requirements than extruded products. This especially applies to transparent molded products which have outstanding appearance requirements. Extruded products like tubes or window frames are often subject to coating processes so that appearance requirements are far less important or nearly or de facto not existent.

Troubleshooting of surface defects is a very complex task since each single process parameter as well as the type of the injection molding machine and the used raw material itself may have an influence on the surface quality. Troubleshooting of surface defects is thus a time-consuming process.

It is therefore an object of the invention to significantly reduce the effort of troubleshooting concerning surface defects resulting from injection molding processes and in particular to reduce the effort of troubleshooting actions which are directed toward a molded product comprising a polymer, preferably a thermoplastic polymer and in particular a polycarbonate.
For achieving this object, the invention teaches a method for controlling of an injection molding process, wherein a system for controlling of an injection molding process comprises an injection molding machine, a process monitoring assembly, a communication device and a central remote assembly, wherein the injection molding machine produces a molded product, wherein the process monitoring assembly gathers process data of the injection molding machine, wherein the communication device and the central remote assembly send communication data to each other, wherein the process data are forwarded to the central remote assembly, wherein the system comprises a product inspection assembly, wherein the product inspection assembly inspects the molded product and generates inspection data, wherein the inspection data are forwarded to the central remote assembly.

The invention is based on the finding that troubleshooting of surface defects is too complex for a single manufacturer of molded products since this kind of troubleshooting requires technical experts with an outstanding amount of experience. The invention is further based on the insight that efficiency of visits of production sites of the manufacturers for troubleshooting is too low. Another finding according to the invention is that remote troubleshooting is only then helpful if process data as well as inspection data are sent to the central remote assembly of a customer support. This enables the technical experts to assess the situation properly and to provide purposive solutions for surface defect troubleshooting.

The injection molding machine preferably comprises a feeding unit, in particular a feeding hopper or a feeding tube, and/or an injection unit which preferably comprises a rotating mixing screw and a motor for driving the mixing screw and/or a clamping unit which preferentially comprises a mold with at least one mold cavity. The mold advantageously comprises a first mold element and a second mold element both forming the mold cavity. The first mold element may be disposed downstream of the mixing screw and upstream of the second mold element. The second mold element preferentially is movable toward the first mold element. Both mold elements may each comprise an active surface, wherein the active surfaces face toward each other. Both active surfaces together may form an active region. The injection molding machine preferably further comprises a user interface, for example a touchscreen, and/or a processing unit. The processing unit is advantageously connected with one or more sensors for detecting process parameters, thereby providing process data like temperatures/pressures at one or more points of the injection molding machine. At least one sensor preferentially detects rotational speed of the mixing screw. It is preferred that the injection molding machine has a data interface which in particular allows to provide access to raw process data or conditioned process data of the injection molding machine. The expression "injection molding process" in particular means a process in which molten raw material of the molded product fills out the mold cavity until the mold cavity is completely filled with the raw material. It is preferred that the injection molding process is a batchwise process in which the mold cavity has to be discharged and then to be filled again with molten raw material.

The term "assembly" in particular means one or more devices in one or more housings. The expression "process monitoring assembly", for example, can comprise one or more of the sensors of the injection molding machine and/or one or more process monitoring cameras for monitoring the injection molding machine. The term "central remote assembly" especially means a customer support center or a part of a customer support center and preferably comprises technical experts and/or computers and/or monitors and/or mobile devices and/or headsets and/or control devices and/or databases and/or servers and the like. The expression "product inspection assembly" in particular means one or more devices which inspect one or more molded products and which in particular inspect the surface of the molded product/products. The product inspection assembly preferentially comprises one or more cameras and/or sensors for gathering inspection data of a certain molded product. The inspection data may in particular comprise photos and/or videos of the molded product.

According to a preferred embodiment, the injection molding machine and the central remote assembly are remotely located to each other. The term "remote" in particular means that the injection molding machine and the central remote assembly are at least located in different buildings and further preferred in different cities.

The expression "communication device" preferably means a mobile or a stationary electronic device which is able to communicate with other electronic devices so that a communication channel between the communication device and the central remote assembly can be established. The communication device can be, for example, a personal computer, a smartphone or a router or a device of a wireless network.

The communication data preferably comprise the process data and/or the inspection data forwarded to the central remote assembly. The communication data may also comprise control data in order to remotely control the injection molding machine via the central remote assembly. The communication data may further comprise voice data of telephone calls and/or video data of video conferences and/or message data like data of short messages.

Preferentially, the communication device is a mobile communication device, wherein the communication device comprises an application and in particular a mobile application, wherein it is preferred that the application enables a connection of the communication device with the central remote assembly and/or with the process monitoring assembly and/or with the product inspection assembly. The mobile communication device can be, for example, a smartphone, a tablet or a laptop. It is preferred that the process data and/or the inspection data move from the communication device to the central remote assembly. Preferably at least a part of the process data is transmitted from the injection molding machine/the interface of the injection molding machine to the communication device. It is possible that a part of the process data is generated by an external device of the process monitoring assembly. The external device of the process monitoring assembly advantageously is a camera and in particular an infrared camera for recording of the heat distribution of the injection molding machine. It is preferred that the process data of the external device of the process monitoring assembly move from the external device to the communication device and from there preferably to the central remote assembly. It is preferred that the inspection data are transmitted to/generated by the communication device and from there to the central remote assembly. According to an advantageous embodiment, the product inspection assembly or at least a part of the product inspection assembly is physically connected with the communication device.

According to a preferred embodiment, the product inspection assembly comprises the communication device, wherein it is preferred that the product inspection assembly and/or the communication device comprises an inspection camera for visible light and/or an infrared camera. Preferentially, the inspection camera/the communication device is equipped with a camera equipment, wherein it is preferred that the camera equipment comprises a micro lens and/or a magnifying glass and/or a microscope objective and/or a polarizer. The polarizer preferably is a polarizing filter lens. The inspection data generated via the product inspection assembly preferably comprise at least one image of the whole molded product and/or at least an image of a part of the molded product. It is possible that the inspection data comprise one or more single images or one or more videos. According to a very preferred embodiment, the inspection data comprise real-time videos.

According to a preferred embodiment, the system comprises at least one overview camera for generation of overview data, wherein the at least one overview camera is positioned to provide images of the - preferably whole - injection molding machine. The system preferentially comprises at least two or at least three overview cameras for generation of three-dimensional overview data of the injection molding machine. The overview data are advantageously sent to the central remote assembly and/or to the communication device and/or to the process monitoring assembly. The system is preferably configured so that the central remote assembly and/or the communication device can receive the overview data in real-time. It is very preferred that the overview data are used to create a virtual room comprising a virtual duplicate of the injection molding machine.

It is preferred that the process monitoring assembly comprises a mobile monitoring device, wherein the mobile monitoring device preferably is a head-mounted display, wherein the head-mounted display preferably comprises smartglasses for generation of augmented reality data. It is preferred that the mobile monitoring device generates images of the injection molding machine, wherein the images preferably depend on the orientation of the mobile monitoring device. The mobile monitoring device advantageously comprises a camera. Preferentially, the field of view of the camera of the mobile monitoring device overlaps with the field of view when a user looks through the smartglasses. It is preferred that the camera of the mobile monitoring device generates a duplicate of the image a user would see if he looked through the smartglasses. The images of the camera of the mobile monitoring device preferably belong to the process data and are preferably sent to the communication device and/or to the central remote assembly.

According to an advantageous embodiment, the central remote assembly comprises a mobile remote device, wherein the mobile remote device preferably comprises a head-mounted display and/or is a virtual reality headset. It is preferred that the central remote assembly and in particular the mobile remote device visualizes said overview data/said virtual room. It is preferred that the mobile remote device receives the overview data preferably in real-time so that a user of the central remote assembly can move virtually through said virtual room. Advantageously, the central remote assembly comprises a navigation device for navigation through said virtual room generated by said overview data. The navigation device can be, for example, a joystick, wherein the navigation device allows navigation through the virtual room. The navigation device may also be a device which detects human motions and which transfers these motions/gestures into the virtual room.

It is very preferred that the system comprises a database, wherein the data base preferably comprises recognition data for recognition of components of the injection molding machine and/or of molded products. The database is preferentially part of the central remote assembly. The recognition data advantageously comprise three-dimensional images of components of the injection molding machine and/or of molded products. It is preferred that the system recognizes a certain component of the injection molding machine and/or a certain molded product by comparing an image of the certain component and/or of the certain molded product with said recognition data. According to another embodiment, at least one component of the injection molding machine has a marker. The marker comprises marker data and can be, for example, a barcode sticker or an RFID chip. The system/the process monitoring assembly/the mobile monitoring device detects the marker, for example with a camera of the mobile monitoring device or with an according RFID device, so that the system/the process monitoring assembly/the mobile monitoring device recognizes a certain component of the injection molding machine. The recognition data preferably comprises an allocation list in which marker data are allocated to according components.

It is very preferred that the system recognizes a certain component of the injection molding machine and/or a certain molded product shown on a display of the process monitoring assembly and/or of the central remote assembly and/or of the communication device, wherein it is preferred that some of the process data related to the certain component and/or to the certain molded product are visualized on the display of the process monitoring assembly and/or of the central remote assembly and/or of the communication device. It is preferred that the visualized process data are - preferably spatially - allocated to an image of the certain component and/or of the certain molded product shown on the display of the process monitoring assembly and/or of the central remote assembly and/or of the communication device. The process data are preferentially provided within one or more info boxes belonging to the according component of the injection molding machine. It is preferred that an info box comprises a pointer which points onto the according component of the injection molding machine.

It is very advantageous if the process monitoring assembly comprises a process monitoring camera which is in particular an infrared camera for recording of heat distribution of the injection molding machine. It is preferred that the process monitoring camera has a fixed position which is, for example, determined by a mount or a tripod. It is possible that the infrared camera is attached to the communication device/the mobile communication device/the smartphone. It may be advantageous that the process monitoring camera is located in such a manner that the whole injection molding machine can be recorded. It is very preferred that the process monitoring camera/the infrared camera is directed onto the mold so that the, preferably whole, active region of the mold can be recorded when the mold is freshly opened. In a very advantageous embodiment, the process monitoring assembly comprises an auxiliary infrared camera. It is very preferred if the process monitoring camera is directed onto the active surface of the first mold element while the auxiliary infrared camera is directed onto the active surface of the second mold element. Preferably, the process monitoring camera and/or the auxiliary infrared camera records the whole active surface of the first/second mold element. It is advantageous if the process monitoring assembly comprises at least one sensor and in particular at least one sensor of the injection molding machine. The sensor can be, for example, a thermometer or a thermocouple. The communication device/the app preferentially provides a connection of the process monitoring assembly with the injection molding machine, thereby integrating the at least one sensor of the injection molding machine into the process monitoring assembly.

It is very preferred that the molded product comprises a polymer, preferably a thermoplastic polymer. The thermoplastic polymer is preferably selected from polyamides, polyesters, polyarylene sulfides, polyarylene oxides, polysulfones, polyarylates, polyimides, poly(ether)ketones, poly(ether)imides, polycarbonates, polyolefines, polyorganosilxanes, polyacrylates, thermoplastic polyurethanes, polyoxazolidinones, polystyrenes, copolymers of said polymers among each other and/or with other polymers, including thermoplastic elastomers. Particularly preferred thermoplastic polymers are polycarbonates and co-polycarbonates. Mixtures of polymers and copolymers are also included.

The communication device and/or the central remote assembly are preferably configured to control operation of the injection molding machine. According to one embodiment, the central remote assembly controls the injection molding machine via the communication device. It is possible that the central remote assembly controls operation of the injection molding machine directly. It is preferred that the central remote assembly has access to the data interface of the injection molding machine. Control of the injection molding machine preferably takes place by controlling one or more setting parameters of the injection molding machine. Setting parameters of the injection molding machine are, for example, rotational speed of the mixing screw of the injection unit and/or electrical power of a heating element of the injection unit. It is preferred that the central remote assembly has all the control functions which are provided by the user interface of the injection molding machine.

The communication device and/or the central remote assembly advantageously are configured to perform communication within a chatroom and/or a telephone call and/or a web conference and/or a video conference. The communication data preferably comprise data of a chatroom and/or a telephone call and/or a web conference and/or a video conference.

According to a particular embodiment, the system comprises a robot, with a gripper for gripping the molded product. The robot is preferably constructed to move the molded product - preferably from the injection molding machine - to the product inspection assembly. It is preferred that the movement of the robot enables at least one component, in particular a camera, of the product inspection assembly to gather inspection data of the molded product. It is possible that the injection molding machine ejects the molded product/the molded products from the mold, whereupon the molded product/products are deposited in a box. The robot is preferentially constructed to grip the molded product out of the box and to move it toward the product inspection assembly. The gripper may be, for example, a claw but can also be a suction device. The term "robot" preferably comprises a robot arm but can also comprise, for example, a multicopter. According to one embodiment, the product inspection assembly is embedded in a conveyor line, wherein the conveyor line is located downstream of the injection molding machine. It is possible that the product inspection assembly inspects only random samples. It is, however, also possible that the product inspection assembly inspects all molded products.

According to a very special embodiment, the system comprises an artificial intelligence unit for proposing reactions for solutions of a surface defect problem of a molded product. It is preferred that the artificial intelligence unit comprises a neuronal network. The artificial intelligence unit is preferably fed with input data comprising the process data and/or the inspection data. Preferentially, the artificial intelligence unit proposes a reaction on said input data for a solution of a surface defect problem of a molded product. It is in particular preferred that the proposed reaction can be manually confirmed or refused, whereby the artificial intelligence unit is trained.

For achieving said object, the invention teaches a system for controlling of an injection molding process, in particular a system according to a method according to the invention, wherein the system comprises an injection molding machine, a process monitoring assembly, a communication device and a central remote assembly, wherein the injection molding machine is able to produce a molded product, wherein the process monitoring assembly is constructed to gather process data of the injection molding machine, wherein the communication device and the central remote assembly are configured to send communication data to each other, wherein the process data are forwarded to the central remote assembly, wherein the system comprises a product inspection assembly, wherein the product inspection assembly is able to inspect the molded product and to generate inspection data, wherein the system is configured to forward the inspection data to the central remote assembly.

The invention is explained by means of two figures showing two preferred embodiments, wherein
- Fig. 1: shows a first embodiment according to the invention and
- Fig. 2: a second embodiment according to the invention with a higher degree of automation.

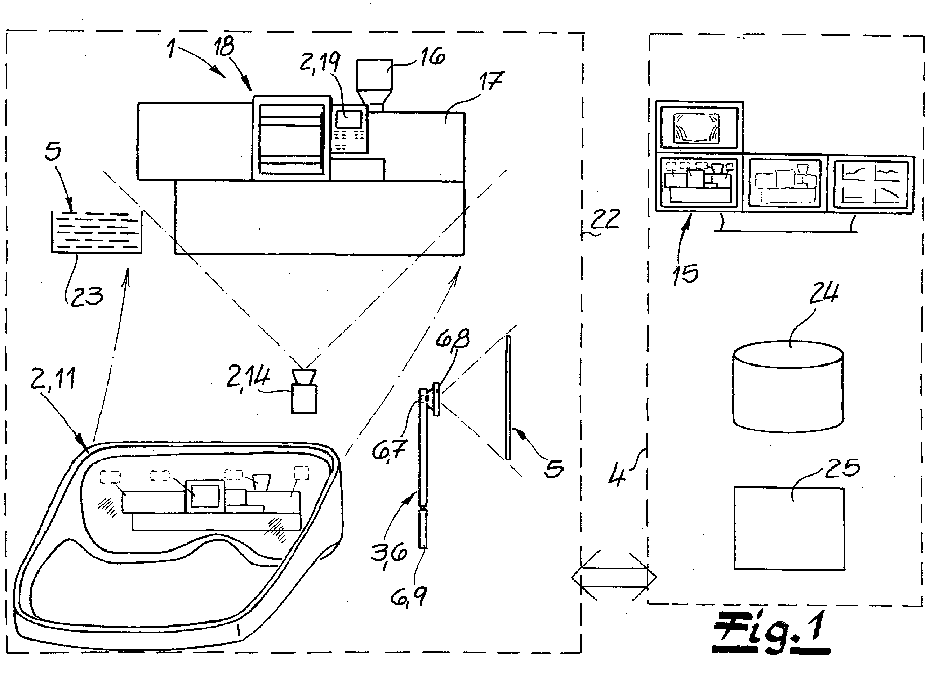

Fig. 1 shows a production site 22 comprising an injection molding machine 1. The injection molding machine 1 according to this embodiment comprises a feed hopper 16, an injection unit 17, a clamping unit 18 and a user interface 19. The feed hopper 16 of this embodiment is fed with a granular thermoplastic polymer, presently polycarbonate. The polycarbonate is heated and stirred within the injection unit 17 in order to melt on the material in a homogeneous manner. The molten material is then injected under pressure into a cavity or cavities of a mold within the clamping unit 18. After cooling and solidification, the molten polycarbonate results in a molded product 5 or in several molded products 5 which is/are automatically deposited in a box 23. The molded product 5 of this embodiment is drawn for the sake of convenience as a transparent pane.

The injection molding machine is part of a system for controlling of an injection molding process. The system comprises a process monitoring assembly 2, a communication device 3, a central remote assembly 4 and a product inspection assembly 6. While the process monitoring assembly 2, the communication device 3 and the product inspection assembly 6 are allocated to the production site 22, the central remote assembly 4 according to this embodiment is part of a customer support center. The customer support center may belong to the manufacturer of the raw material used for the molded products 5, i.e. the polycarbonate in the present case. The central remote assembly 4 of this embodiment comprises a database 24, a server 25 and various displays 15 for controlling of the injection molding process.

The process monitoring assembly 2 preferably comprises a user interface 19 of the injection molding machine 1 which is connected with a processing unit of the injection molding machine 1. The processing unit of the injection molding machine may be connected with a plurality of sensors (not shown) distributed within the injection molding machine 1. The sensors may, for example, detect temperatures, mold flow and pressures at several critical points within the injection molding machine 1.

The process monitoring assembly 2 may further comprise smartglasses 11 with a transparent display on which images can be projected in order to provide an augmented reality. The process monitoring assembly 2 advantageously also comprises a process monitoring camera 14 which - in this embodiment - is an infrared camera monitoring heat distribution on the whole surface of the freshly opened mold of the injection molding machine 1. Since the position of the injection molding machine 1 is fixed, the process monitoring camera 14 is advantageously also mounted at a fixed position.

The communication device 3 of this embodiment is part of the product inspection assembly 6 and, in the present case, is a smartphone comprising a conventional camera. This camera has the role of an inspection camera 7 in order to make photos and/or videos of molded products 5. The inspection camera 7 is in particular used for detection of surface defects like black specks, foreign material contamination, sink marks, streaks or flashes. Since these defects are often very small, the communication device 3 may be equipped with a camera equipment 8 which can be, for example, a microscope objective adapted for attachment to the communication device 3. The camera equipment 8 may also comprise a polarizing filter lens for recording of residual stresses of the molded product 5. The polarizing filter lens of this embodiment is adapted for attachment to the communication device 3 as well. The product inspection assembly 6 may further comprise an infrared camera 9 which advantageously is also adapted for attachment to the communication device 3. The infrared camera 9 can be used for monitoring of the heat distribution on the molded product 5 itself when the molded product 5 has been freshly ejected off the injection molding machine 1.

According to this embodiment, the communication device 3 comprises an app which provides a connection with the injection molding machine 1, the process monitoring assembly 2 and the central remote assembly 4. Thus, a user of the communication device 3 is able to see the data from the user interface 19, from the process monitoring camera 14 and from all parts of the product inspection assembly 6 on his communication device 3. Likewise, a user at the central remote assembly 4 can see on the displays 15 all the information the user at the production site 22 can see. The central remote assembly 4 is preferably configured so that the user at the central remote assembly 4 has the right to control the injection molding machine 1. The bidirectional flow of communication data is symbolized via the double arrow of Fig. 1.

Preferentially, the data base 24 comprises recognition data of the components 16, 17, 18 of the injection molding machine 1. These recognition data are three-dimensional images which are in particular useful for the smartglasses 11. The user of the production site 22 may put on the smartglasses 11 and see through the glasses the injection molding machine 1 with its components 16, 17, 18. A camera of the smartglasses 11 records images which are basically the same the user sees when he looks through the smartglasses 11. These images are advantageously sent to the central remote assembly 4.

The server 25 preferably comprises an object recognition algorithm which compares the images of the components 16, 17, 18 from the smartglasses 11 with the recognition data of the data base 24. The server 25 recognizes the components 16, 17, 18 and allocates certain process data to said components 16, 17, 18. This allocation is projected onto the glasses of the smartglasses 11 so that the user sees info boxes next to the according components 16, 17, 18. These info boxes may contain important process data like certain temperatures and/or pressures. The user at the production site 22 thus has not to click through a menu of the user interface 19 in order to achieve certain information of a certain component 16, 17, 18. Instead, he needs only to look through the smartglasses 11 in order to see all the critical information allocated to a certain component 16, 17, 18 at once.

The image of the smartglasses 11 is advantageously transmitted to a display 15 of the central remote assembly 4, which is indicated within the lower left display 15. Just as an example, the upper display 15 shows residual stresses within the molded product 5 recorded by the inspection camera 7 equipped with the polarizing filter lens. The display 15 in the middle shows an image of the injection molding machine recorded with the process monitoring camera 14 highlighting the heat distribution of the whole surface of the freshly opened mold. The display 15 on the right visualizes certain graphs of process parameters.

If the user at the production site 22 discovers a certain surface defect at the molded products 5, he can call the central remote assembly 4, for example within a video conference, and can transmit images of the defect at the molded products 5. The user at the central remote assembly 4 has thus detailed information concerning the defect as well as concerning the process parameters of the injection molding machine 1. These information include infrared images of the whole surface of the freshly opened mold, certain temperatures and pressures of certain critical points of the injection molding machine 1 and values of setting parameters. The user at the central remote assembly 4 therefore can give detailed instructions to improve the molding process in order to avoid the surface defects of the molded part 5. He may, for example, advise to adjust certain setting parameters or to use another raw material or to modify the raw material in a certain manner. The process of troubleshooting of injection molding processes is therefore accelerated.

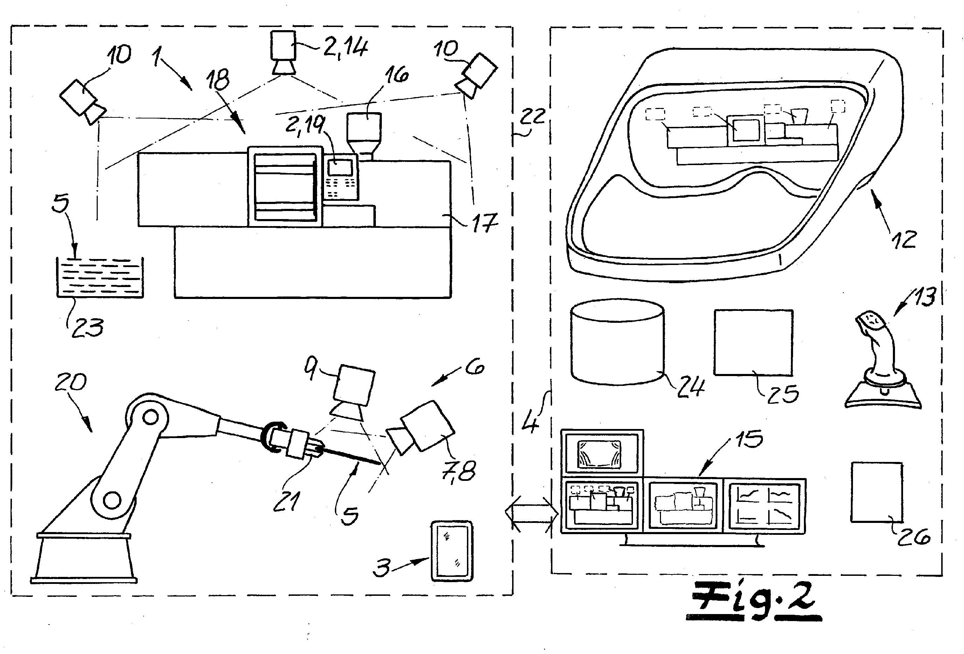

Fig. 2 represents a second, more automated embodiment of the invention. A system for controlling of an injection molding process comprises the same injection molding machine 1 like the one of the first embodiment and thus comprises the same components 16, 17, 18, 19. Molded products 5 are automatically deposited in a box 23. A process monitoring assembly 2 again comprises a process monitoring camera 14 which is an infrared camera and which monitors the whole surface of the freshly opened mold of the injection molding machine 1 of a production site 22. A central remote assembly 4 is located remotely to the production site 22 and in particular comprises again displays 15, a database 24 and a server 25.

The first important difference is that the system for controlling of an injection molding process of the second embodiment comprises a communication device 3 which may be a stationary device for establishing connections with the injection molding machine 1, the central remote assembly 4, the process monitoring assembly 2 and a product inspection assembly 6. This symbolizes that a user at the production site 22 is not necessary anymore. Instead, a robot 20 comprises a gripper 21 which can grip molded products 5 from the box 23 and move them to the stationary product inspection assembly 6. This product inspection assembly 6 may comprise an inspection camera 7 for visible light and an infrared camera 9. The inspection camera 7 may be equipped with camera equipment 8 like a microscope objective and/or a polarizing filter lens. The product inspection assembly 6 is preferably remotely controlled by the central remote assembly 4. This control is advantageously used for remote inspection of the molded products and in particular able to switch between inspection modes (visible light overview, visible light zoomed view, infrared view etc.).

Another important difference between the first and the second embodiment is that the system of the second embodiment comprises two or more overview cameras 10. The overview cameras 10 monitor the injection molding machine 1 from different perspectives so that the server 25 is able to generate a three-dimensional real-time image of the injection molding machine 1 and its environment. The server 25 thus generates a virtual room of the area of the production site 22 comprising the injection molding machine 1. A user at the central remote assembly 4 thus may put on a virtual reality headset 12 and can navigate, for example with a navigation device 13 like a joystick, through the virtual room like a person which is at the production site 22. It is preferred that the data base 24 comprises recognition data which enables the server 25 to allocate process data to certain components 16, 17, 18. Thus, the user of the central remote assembly 4 can see info boxes comprising important process data next to the according component 16, 17, 18 when he looks into the virtual reality headset 12.

An alert is created at the production site 22 preferably automatically via the product inspection assembly 6 or via an employee when a certain surface defect of the molded product 5 is found. Upon this alert, the user of the central remote assembly 4 will normally first check the images comprising the surface defect and will then check the relevant process data in order to determine the error source of the defect.

Advantageously, the central remote assembly 4 comprises an artificial intelligence unit 26 which comprises, for example, a neuronal network. This artificial intelligence unit 26 is fed with input from the production site 22 (process data, inspection data) and provides an output comprising a proposal in order to solve the problem of a surface defect of the molded product 5. The user of the central remote assembly 4 may confirm or refuse this proposal so that the artificial intelligence unit 26 is trained to solve the problems at the production site 22. The artificial intelligence unit 26 is thus an assistant of the user at the central remote assembly 4 and improves efficiency at the central remote assembly 4.

## Claims

1. Method for controlling of an injection molding process, wherein a system for controlling of an injection molding process comprises an injection molding machine (1), a process monitoring assembly (2), a communication device (3) and a central remote assembly (4), wherein the injection molding machine (1) produces a molded product (5), wherein the process monitoring assembly (2) gathers process data of the injection molding machine (1), wherein the communication device (3) and the central remote assembly (4) send communication data to each other, wherein the process data are forwarded to the central remote assembly (4), wherein the system comprises a product inspection assembly (6), wherein the product inspection assembly (6) inspects the molded product (5) and generates inspection data, wherein the inspection data are forwarded to the central remote assembly (4).

2. Method according to claim 1, wherein the communication device (3) preferably is a mobile communication device, wherein the communication device (3) comprises an application and in particular a mobile application, wherein it is preferred that the application enables a connection of the communication device (3) with the central remote assembly (4) and/or with the process monitoring assembly (2) and/or with the product inspection assembly (6).

3. Method according to claims 1 or 2, wherein the product inspection assembly (6) comprises the communication device (3), wherein it is preferred that the product inspection assembly (6) and/or the communication device (3) comprises an inspection camera (7) for visible light and/or an infrared camera (9).

4. Method according to one of the claims 1 to 3, wherein the system comprises at least one overview camera (10) for generation of overview data, wherein the at least one overview camera (10) is positioned to provide images of the - preferably whole - injection molding machine (1).

5. Method according to one of the claims 1 to 4, wherein the process monitoring assembly (2) comprises a mobile monitoring device, wherein the mobile monitoring device preferably comprises a head-mounted display, wherein the head-mounted display preferably comprises smartglasses (11) for generation of augmented reality data.

6. Method according to one of the claims 1 to 5, wherein the central remote assembly (4) comprises a mobile remote device, wherein the mobile remote device preferably comprises a head-mounted display and/or is a virtual reality headset.

7. Method according to one of the claims 1 to 6, wherein the system comprises a database (24), wherein the database (24) preferably comprises recognition data for recognition of components of the injection molding machine (1) and/or of molded products (5).

8. Method according to one of the claims 1 to 7, wherein the system recognizes a certain component of the injection molding machine (1) and/or of a certain molded product (5) shown on a display of the process monitoring assembly (2) and/or of the mobile communication device (3) and/or of the central remote assembly (4), wherein it is preferred that some of the process data related to the certain component and/or to the certain molded product (5) are visualized on said display.

9. Method according to one of the claims 1 to 8, wherein the process monitoring assembly (2) comprises a process monitoring camera (14) which is in particular an infrared camera.

10. Method according to one of the claims 1 to 9, wherein the molded product (5) comprises a polymer, preferably a thermoplastic polymer and more preferably polycarbonate.

11. Method according to one of the claims 1 to 10, wherein the communication device (3) and/or the central remote assembly (4) controls operation of the injection molding machine (1).

12. Method according to one of the claims 1 to 11, wherein the communication device (3) and/or the central remote assembly (4) are configured to perform a message and/or a telephone call and/or a web conference and/or a video conference.

13. Method according to one of the claims 1 to 12, wherein the system comprises a robot (20) with a gripper (21) for gripping the molded product (5).

14. Method according to one of the claims 1 to 13, wherein the system comprises an artificial intelligence unit (26) for proposing reactions for solutions of a surface defect problem of a molded product (5).

15. System for controlling of an injection molding process, in particular a system according to one of the claims 1 to 14, wherein the system comprises an injection molding machine (1), a process monitoring assembly (2), a communication device (3) and a central remote assembly (4), wherein the injection molding machine (1) is able to produce a molded product (5), wherein the process monitoring assembly (2) is constructed to gather process data of the injection molding machine (1), wherein the communication device (3) and the central remote assembly (4) are configured to send communication data to each other, wherein the system is configured to forward the process data to the central remote assembly (4), wherein the system comprises a product inspection assembly (6), wherein the product inspection assembly (6) is able to inspect the molded product (5) and to generate inspection data, wherein the system is configured to forward the inspection data to the central remote assembly (4).
